# FASCICULE DE BREVET EUROPEEN

(11) **EP 2 833 370 B1**
(45) Date de publication et mention de la délivrance du brevet: **27.11.2024**
(21) Numéro de dépôt: 14176437.3
(22) Date de dépôt: 10.07.2014
(51) Int. Cl.: H01B 3/44, G01K 11/12, H01B 7/32

(54) **Cable comprenant une couche polymère reticulée thermochromique**
Kabel, das eine thermochrome Polymer-Netzschicht besitzt
Cable including a thermochromic cross-linked polymer layer

(30) Priorité: 29.07.2013 FR 1357462
(43) Date de publication de la demande: 04.02.2015
(73) Titulaire: Nexans, 92400 Courbevoie (FR)
(72) Inventeur: Poulard, Corinne, 69530 ORLIENAS (FR); Breton, Yann, 38080 L'ISLE D'ABEAU (FR)
(74) Mandataire: Ipsilon

(56) Documents cités:
- WO-A1-02/27733
- WO-A2-2008/067238
- FR-A1- 2 967 258
- DATABASE WPI Week 201376, Derwent World Patents Index; AN 2013-H26721, XP002721831
- DATABASE WPI Week 201214, Derwent World Patents Index; AN 2012-A73117, XP002721832

## Description

La présente invention se rapporte à un câble d'énergie et/ou de télécommunication comprenant une couche polymère réticulée thermochromique, et à un procédé de fabrication de ladite couche.

Dans le domaine de la câblerie, il est connu d'utiliser des compositions thermochromiques pour détecter des dysfonctionnements dans des câbles électriques, liés notamment à une surchauffe des câbles.

A titre d'exemple, on peut citer le document FR-2 967 258 qui décrit un dispositif de détection d'une élévation de température comprenant un élément thermochromique apte à changer irréversiblement de couleur sous l'action de la chaleur. Cet élément thermochromique peut être du type jonc extrudé obtenu à partir d'une composition polymère comprenant un polymère organique et un agent thermochromique, ce jonc étant indépendant du câble avec lequel il est associé.

Toutefois, la mise en oeuvre de ce type de dispositif ainsi que son encombrement une fois associé à un ou plusieurs câbles ne sont pas optimisés. En outre, lors d'une élévation trop importante de la température au voisinage dudit jonc, ce dernier peut fondre entrainant son inutilisation.

La demande internationale WO 02/27733 A1 divulgue un matériau isolant pour isoler un conducteur, comprenant un indicateur contenu dans le matériau isolant, ledit indicateur évoluant optiquement en fonction de la température. Cette demande internationale concerne en outre un conducteur qui est isolé avec un tel matériau isolant.

Le but de la présente invention est de pallier les inconvénients des techniques de l'art antérieur en proposant notamment un câble intégrant un dispositif de détection d'une élévation de température, qui soit facile à mettre en oeuvre et qui ne détériore pas les propriétés mécaniques et/ou électriques du câble lors d'une élévation anormale de température.

La présente invention a pour objet un câble d'énergie et/ou de télécommunication comprenant un élément conducteur allongé, caractérisé en ce que l'élément conducteur allongé est entouré par au moins une couche polymère réticulée obtenue à partir d'une composition polymère réticulable comprenant un polymère et un agent thermochromique apte à changer irréversiblement de couleur à une température de réaction Tₐₜ sous l'action d'une élévation de température. Plus particulièrement, ladite température de réaction Tₐₜ est supérieure à la température de réticulation Tᵣ de la composition polymère.

La couche réticulée thermochromique de l'invention permet avantageusement de préserver les propriétés mécaniques et/ou électriques du câble lors d'une élévation de température tout en permettant de détecter visuellement un dysfonctionnement du câble. La couche réticulée thermochromique du câble de l'invention permet ainsi de détecter une élévation de température, notamment de détecter visuellement une élévation anormale de température au sein du câble et/ou dans l'environnement du câble.

Plus particulièrement, la couche polymère réticulée du câble de l'invention est une couche apte à changer de couleur à une température supérieure à la température T de fonctionnement du câble.

La température T de fonctionnement du câble peut être définie par la température supportée par le câble, ladite température étant principalement fonction de la chaleur libérée par effet Joule lorsque le câble est en configuration opérationnelle, et/ou de la température relative à l'environnement du câble.

A cette température T, l'élément conducteur allongé comme la ou les couches entourant ledit élément conducteur allongé (et comme tout autre élément constitutif du câble) ne subissent sensiblement aucun dommage susceptible d'entraîner des pertes électriques ou d'affecter les propriétés mécaniques du câble.

A titre d'exemple, la température T de fonctionnement du câble est égale à 90°C pour des câbles de type U1000 R2V selon la norme NF C 32-321 ; ou de 70°C pour des câbles de type HO7V-U selon la norme NF C 32-201-3. Parfois la température T de fonctionnement du câble peut atteindre 120°C, voire 145°C pour des câbles industriels isolés en silicone.

Lorsque le câble fonctionne de manière anormale, par exemple lors d'un problème électrique induisant une élévation anormale de la température de fonctionnement du câble et/ou lors d'une élévation anormale de la température relative à l'environnement du câble, la température du câble dépasse ainsi ladite température T : la température du câble devient alors supérieure à la température T supportée par le câble en configuration opérationnelle. Le câble va ainsi être en surchauffe et les éléments constitutifs du câble pourront alors subir les dommages mentionnés ci-avant.

Grâce à l'invention, ce fonctionnement anormal du câble sera traduit par un changement de couleur irréversible de l'élément thermochromique, que l'on pourra ainsi facilement identifier de façon visuelle, sans pour autant entrainer une dégradation des propriétés mécaniques et/ou électriques de la couche polymère réticulée.

La température de réaction Tₐₜ de l'agent thermochromique est la température minimale à partir de laquelle un changement de couleur se produit visuellement.

La température de réaction Tₐₜ de l'agent thermochromique peut être supérieure d'au moins 15°C à la température de réticulation Tᵣ, et de préférence supérieure d'au moins 20°C à la température de réticulation Tᵣ.

Selon un mode de réalisation préféré, la température de réaction Tₐₜ de l'agent thermochromique peut être supérieure à la température de fusion T_{f} ou à la température de transition vitreuse T_{g} du polymère. Plus particulièrement, la température de réaction Tₐₜ de l'agent thermochromique peut être supérieure d'au moins 15°C à la température de fusion T_{f} ou à la température de transition vitreuse T_{g} du polymère, et de préférence supérieure d'au moins 20°C à la température de fusion T_{f} ou à la température de transition vitreuse T_{g} du polymère.

Selon un mode de réalisation préféré, la couche polymère réticulée peut être une couche s'étendant en continue le long du câble de l'invention. Elle peut être plus particulièrement une couche extrudée. Plus particulièrement, la température de réaction Tₐₜ de l'agent thermochromique peut être supérieure à la température d'extrusion Tₑ de la composition polymère. Notamment, la température de réaction Tₐₜ de l'agent thermochromique peut être supérieure d'au moins 15°C à la température d'extrusion Tₑ de la composition polymère, et de préférence supérieure d'au moins 20°C à la température d'extrusion Tₑ de la composition polymère.

Les agents thermochromiques sont bien connus de l'homme du métier et peuvent être de toute nature sous réserve de satisfaire l'objet de la présente invention.

Par exemple, les agents thermochromiques peuvent être choisis parmi les colorants dits « Leuco dyes », et les polydiacéthyléniques, ou un de leurs mélanges.

On appelle « Leuco dye » un pigment dont les molécules peuvent avoir deux formes, l'une étant incolore et l'autre étant colorée. Classiquement la structure moléculaire peut être une spirolactone, comme la « crystal violet lactone » qui passe de l'incolore au bleu intense sous l'action de la température. Les Leuco dyes sont réversibles, ils sont donc classiquement associés à un acide de lewis qui stabilise la forme colorée et rend le changement de couleur irréversible.

Les polyacétylènes, aussi appelés polyéthyne, sont des molécules qui changent de couleur par changement de leur configuration moléculaire.

Les polyacétylènes ont des changements de couleur irréversibles quand ils sont sous forme de sel de sodium par exemple. Dans cet exemple, la couleur passe irréversiblement du rouge au bleu entre 55 et 65 °C puis réversiblement du bleu au rouge entre 70 et 100°C, puis irréversiblement du rouge au orange au-delà de 130°C. On les utilisera de préférence lorsque l'on souhaitera identifier un changement de couleur à une température supérieure à 70°C, de préférence supérieure à 90°C.

On peut citer comme agent thermochromique les agents commercialisés par la société Colour-Therm, comme par exemple :
- le composé référencé « C » passant de la couleur noire à la couleur rouge lorsque la température est supérieure à 90°C, ou
- le composé référencé « CT 115 » passant de la couleur rose à la couleur violette lorsque la température est supérieure à 120°C.

La composition polymère réticulable comprend au moins 5 % en poids d'agent thermochromique.

Elle peut en outre comprendre moins de 50 % en poids d'agent thermochromique, et de préférence moins de 20% en poids d'agent thermochromique.

Le ou les polymère(s) de l'invention, du type inorganique ou organique, peuvent être des homo- ou des co-polymères ayant des propriétés thermoplastiques et/ou élastomère.

Les polymères inorganiques peuvent être du type polyorganosiloxane.

Les polymères organiques peuvent être du type polymère d'oléfine, ou en d'autres termes polyoléfine. Plus particulièrement, le polymère d'oléfine est un polymère d'éthylène ou de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

Les polymères ayant une température de fusion T_{f} ou de transition vitreuse T_{g}, de l'ordre de 70-90°C sont préférés.

La composition polymère réticulable comprend au moins 50 % en poids de polymère, et de préférence au moins 80% en poids de polymère.

Dans un mode de réalisation particulier, la composition polymère réticulable peut comprendre au moins 90% en poids de polymère(s) associé(s) à l'agent thermochromique.

La composition polymère réticulable peut comprendre en outre un colorant. Ledit colorant permet avantageusement de mieux faire ressortir visuellement le changement de couleur de l'agent thermochromique dans la composition, notamment lorsque le polymère utilisé est transparent.

L'agent colorant peut être tout type de pigments bien connus de l'homme du métier, ajoutés purs ou en mélange maître dans la composition de l'invention. A titre d'exemple, on peut citer comme agent colorant le dioxyde de titane (TiO₂), des oxydes de fer rouge, jaune ou orange, du noir de carbone, des oxydes de chrome vert.

A titre d'exemple, la quantité de colorant dans la composition polymère réticulable peut être d'au plus 5 parties en poids pour 100 parties de polymère.

Dans la présente invention, on entend par « réticulé » un taux de gel, selon la norme ASTM D2765-01, d'au moins 40%, de préférence d'au moins 50%, de préférence d'au moins 60%, et de façon particulièrement préférée d'au moins 70%.

La réticulation de la composition polymère, ou plus particulièrement du polymère de la composition, peut être réalisée par toutes techniques bien connues de l'homme du métier, telles que par exemple réticulation silane, réticulation peroxyde, réticulation par rayonnements actiniques (e.g. ultraviolets), ou réticulation par bombardement d'électrons.

A titre d'exemple, lorsque la réticulation est réalisée par voie silane, la composition polymère réticulable peut comprendre en outre un composé silane et un générateur de radicaux libres sous l'action de la chaleur.

Le composé silane, bien connu de l'homme du métier, peut comprendre au moins une fonction insaturée et au moins un groupement hydrolysable, de préférence deux groupements hydrolysables (identiques ou différents), et de façon particulièrement préférée trois groupements hydrolysables (identiques ou différents).

Les groupements hydrolysables du polymère de l'invention peuvent être des groupements alcoxysilanes et/ou des groupements carboxysilanes, de préférence des groupements alcoxysilanes.

A titre d'exemple, on peut citer comme alcoxysilane, le vinyl trimethoxy silane, le vinyltriéthoxy silane, ou le vinyl tris(2-méthoxyéthoxy) silane.

Le composé générateur de radicaux libres sous l'action de la chaleur est destiné à initier la réaction de greffage du composé silane sur le polymère et à ainsi greffer le silane audit polymère.

Le composé générateur de radicaux libres peut être choisi parmi le ter-butyl peroxybenzoate, le 2,5-dimethyl-2,5-di(ter-butylperoxy)-3-hexyne, le 2,5-dimethyl-2,5-di(terbutylperoxy)-hexane, le di-ter-butylperoxyde, le di(2-ter-butylperoxypropyl-(2))-benzene, le 00-tert-Butyl O-2-(ethylhexyl) monoperoxycarbonate, et le peroxyde de dicumyle, ou un de leurs mélanges.

La composition polymérique de l'invention peut également comprendre des additifs et/ou des charges bien connus de l'homme du métier, ces additifs et/ou ces charges permettant par exemple d'aider à la mise en oeuvre des polymères, ou d'améliorer leurs propriétés mécaniques, leur réaction au feu, leur stabilité aux UV, leurs propriétés en vieillissement, etc...

On entend par « câble d'énergie et/ou de télécommunication » tout câble électrique et/ou optique, destiné au transport d'énergie et/ou à la transmission de données. Plus particulièrement, ce type de câble peut comprendre un ou plusieurs conducteur(s) électrique(s) et/ou optique(s) (i.e. élément(s) conducteur(s) allongé(s)) entouré(s) par au moins une couche polymère réticulée conforme à l'invention. La couche polymère réticulée peut être une couche électriquement isolante en contact ou non avec le ou les conducteur(s) électrique(s) et/ou optique(s) composant le câble. Elle peut être également une gaine de protection entourant un ou plusieurs conducteur(s) électrique(s) et/ou optique(s) électriquement isolé(s).

La couche réticulée de l'invention peut être ainsi tout type de couche dans un câble, s'étendant le long de l'élément conducteur allongé et entourant ledit élément conducteur allongé. A titre d'exemple, elle peut être :
- une couche électriquement isolante directement en contact physique avec l'élément conducteur allongé, ou bien
- une couche entourant une couche électriquement isolante : dans ce cas, le câble de l'invention peut comprendre en outre une couche électriquement isolante (e.g. une couche comprenant du polychlorure de vinyle (PVC)), la couche polymère réticulée entourant alors ladite couche électriquement isolante.

Dans un mode de réalisation particulièrement préféré, la couche polymère réticulée peut être la couche la plus à l'extérieure du câble.

La couche polymère réticulée peut avoir avantageusement une épaisseur d'au plus 1 millimètre.

Un autre objet de l'invention concerne un procédé de fabrication de la couche polymère réticulée selon l'une quelconque des revendications précédentes, caractérisé en ce qu'il comprend les étapes suivantes :
i.extruder la composition polymère réticulable pour former une couche extrudée, et
ii. réticuler la couche extrudée obtenue à l'étape i,
les étapes i et ii étant réalisées à des températures inférieures à la température de réaction Tat de l'agent thermochromique.

Dans un mode de réalisation particulier, lorsque la réticulation est du type réticulation silane, le procédé peut comprendre les étapes suivantes, préalables à l'étape i :
a.greffer un composé silane au polymère pour obtenir un polymère greffé silane, et
b.mélanger au polymère greffé silane, l'agent thermochromique : la composition polymère réticulable comprend alors un polymère organique greffé silane en tant que polymère de la composition de l'invention.

Les étapes a et b sont réalisées à des températures inférieures à la température de réaction Tₐₜ de l'agent thermochromique.

D'autres caractéristiques et avantages de la présente invention apparaîtront à la lumière des exemples qui vont suivre, lesdits exemples étant donnés à titre illustratif et nullement limitatif.

### Exemple

Une composition polymère réticulable, selon l'invention, a été préparée dans les conditions suivantes.

Dans une première étape, un composé silane est greffé à un polymère du type copolymère d'éthylène et d'acétate de vinyle dans les quantités mentionnées dans le tableau 1 ci-dessous. Les quantités indiquées dans le tableau 1 sont exprimées en parties en poids pour 100 parties en poids de polymère(s).

**Tableau 1**

| | Quantité |
|---|---|
| EVA | 100 |
| Composé silane et peroxyde organique | 2 |

L'origine des constituants du tableau 1 est la suivante :
- EVA est un copolymère d'éthylène et d'acétate de vinyle commercialisé par la société Exxon Mobil sous la référence Escorène UL 0328 ; la température de fusion T_{f} de ce polymère est d'environ 90°C ; et
- Composé silane et peroxyde organique est un agent de réticulation couplé à un générateur de radicaux libres, commercialisé par la société Evonik sous la référence Silfin 59, comprenant 97% en poids de Trimethoxy(vinyl)silane (VTMO) et 3% en poids de peroxyde de dicumyle (DCP).

L'étape de greffage est réalisée dans un mélangeur interne à une température de 150°C en mélangeant l'EVA et le composé silane. Une fois refroidi le mélange a été broyé.

On obtient ainsi un polymère greffé silane (non réticulé).

Dans une deuxième étape, on mélange le polymère organique greffé silane avec un agent thermochromique et un colorant. Les quantités sont mentionnées dans le tableau 2 ci-dessous, et sont exprimées en parties en poids pour 100 parties en poids de polymère(s).

**Tableau 2**

| | Quantité |
|---|---|
| Polymère greffé silane | 100 |
| Agent thermochromique irréversible | 11,1 |
| Colorant | 1,1 |

L'origine des constituants du tableau 2 est la suivante :
- Polymère greffé silane est le polymère organique obtenu à la première étape décrite ci-avant ;
- Agent thermochromique irréversible est une encre commercialisée par la société Brancher sous la référence « Flexo 120 » ; cette encre à l'eau a été séchée à l'air ambiant (25°C) pendant 6 jours afin de la déshydrater et de faciliter ainsi son incorporation dans la matrice polymère greffé silane ; la température de réaction Tₐₜ de cette encre est de 120°C ;
- Colorant est du dioxyde de titane (TiO₂).

L'étape de mélange des constituants du tableau 2 est réalisée à l'aide d'un mélangeur interne à une température de 90°C, puis à l'aide d'un mélangeur à cylindre à une température de 90°C. Le mélangeur à cylindre permet d'améliorer la dispersion de l'agent thermochromique et du colorant dans la matrice polymère greffé silane.

Dans une troisième étape, on extrude le mélange obtenu à la deuxième étape décrite ci-avant, à l'aide d'une extrudeuse monovis, à une température maximale de 95°C. En sortie d'extrudeuse est formée une couche autour d'un câble électrique du type câble HO7VU (fil conducteur électrique de de 1,38 millimètres de diamètre, entouré par une couche en PVC).

Une fois la couche extrudée autour du câble électrique, ce dernier est placé en piscine à 63°C pendant 24 heures pour être réticulé à froid.

Le câble ainsi formé est apte à changer irréversiblement de couleur à une température d'environ 120°C (passe du gris au violet).

## Revendications

1. Câble d'énergie et/ou de télécommunication comprenant un élément conducteur allongé, **caractérisé en ce que** l'élément conducteur allongé est entouré par au moins une couche polymère réticulée obtenue à partir d'une composition polymère réticulable comprenant un polymère et un agent thermochromique apte à changer irréversiblement de couleur à une température de réaction Tₐₜ sous l'action d'une élévation de température, et **en ce que** la composition polymère réticulable comprend au moins 5% en poids dudit agent thermochromique.

2. Câble selon la revendication 1, **caractérisé en ce que** la température de réaction Tₐₜ de l'agent thermochromique est supérieure à la température de réticulation Tᵣ.

3. Câble selon l'une quelconque des revendications précédentes, **caractérisé en ce que** la température de réaction Tₐₜ de l'agent thermochromique est supérieure à la température de fusion T_{f} ou à la température de transition vitreuse T_{g} du polymère.

4. Câble selon la revendication 3, **caractérisé en ce que** la température de réaction Tₐₜ de l'agent thermochromique est supérieure d'au moins 15°C à la température de fusion T_{f} ou à la température de transition vitreuse T_{g} du polymère, et de préférence supérieure d'au moins 20°C à la température de fusion T_{f} ou à la température de transition vitreuse T_{g} du polymère.

5. Câble selon l'une quelconque des revendications précédentes, **caractérisé en ce que** la couche polymère réticulée s'étend en continue le long du câble.

6. Câble selon l'une quelconque des revendications précédentes, **caractérisé en ce que** la couche polymère réticulée est une couche extrudée.

7. Câble selon la revendication 6, **caractérisé en ce que** la température de réaction Tₐₜ de l'agent thermochromique est supérieure à la température d'extrusion Tₑ de la composition polymère.

8. Câble selon la revendication 7, **caractérisé en ce que** la température de réaction Tₐₜ de l'agent thermochromique est supérieure d'au moins 15°C à la température d'extrusion Tₑ de la composition polymère, et de préférence supérieure d'au moins 20°C à la température d'extrusion Tₑ de la composition polymère.

9. Câble selon l'une quelconque des revendications précédentes, **caractérisé en ce que** la composition polymère réticulable comprend moins de 50 % en poids de d'agent thermochromique.

10. Câble selon l'une quelconque des revendications précédentes, **caractérisé en ce que** la composition polymère réticulable comprend au moins 50 % en poids de polymère, et de préférence au moins 80% en poids de polymère.

11. Câble selon l'une quelconque des revendications précédentes, **caractérisé en ce que** le polymère est un polymère d'oléfine.

12. Câble selon l'une quelconque des revendications précédentes, **caractérisé en ce que** le polymère est un copolymère d'éthylène et d'acétate de vinyle (EVA).

13. Câble selon l'une quelconque des revendications précédentes, **caractérisé en ce que** la couche polymère réticulée est la couche la plus à l'extérieure du câble.

14. Câble selon l'une quelconque des revendications précédentes, **caractérisé en ce que** la température de réaction Tₐₜ de l'agent thermochromique est supérieure d'au moins 15°C à la température de réticulation Tᵣ.

15. Procédé de fabrication de la couche polymère réticulée selon l'une quelconque des revendications précédentes, **caractérisé en ce qu'**il comprend les étapes suivantes :
i. extruder la composition polymère réticulable pour former une couche extrudée, et
ii. réticuler la couche extrudée obtenue à l'étape i,
les étapes i et ii étant réalisées à des températures inférieures à la température de réaction Tₐₜ de l'agent thermochromique.

## Patentansprüche

1. Energie- und/oder Telekommunikationskabel, umfassend ein längliches leitendes Element, **dadurch gekennzeichnet, dass** das längliche leitende Element von mindestens einer vernetzten Polymerschicht umgeben ist, die aus einer vernetzbaren Polymerzusammensetzung erlangt wird, umfassend ein Polymer und ein thermochromes Mittel, das geeignet ist, um bei einer Reaktionstemperatur Tₐₜ unter der Wirkung eines Temperaturanstiegs irreversibel seine Farbe zu ändern, und dass die vernetzbare Polymerzusammensetzung mindestens 5 Gewichts-% des thermochromen Mittels umfasst.

2. Kabel nach Anspruch 1, **dadurch gekennzeichnet, dass** die Reaktionstemperatur Tₐₜ des thermochromen Mittels höher ist als die Vernetzungstemperatur Tᵣ.

3. Kabel nach einem der vorherigen Ansprüche, **dadurch gekennzeichnet, dass** die Reaktionstemperatur Tₐₜ des thermochromen Mittels höher ist als die Schmelztemperatur T_{f} oder die Glasübergangstemperatur T_{g} des Polymers.

4. Kabel nach Anspruch 3, **dadurch gekennzeichnet, dass** die Reaktionstemperatur Tₐₜ des thermochromen Mittels mindestens 15 °C höher ist als die Schmelztemperatur T_{f} oder die Glasübergangstemperatur T_{g} des Polymers und vorzugsweise mindestens 20 °C höher ist als die Schmelztemperatur T_{f} oder die Glasübergangstemperatur T_{g} des Polymers.

5. Kabel nach einem der vorherigen Ansprüche, **dadurch gekennzeichnet, dass** sich die vernetzte Polymerschicht kontinuierlich entlang des Kabels erstreckt.

6. Kabel nach einem der vorherigen Ansprüche, **dadurch gekennzeichnet, dass** die vernetzte Polymerschicht eine extrudierte Schicht ist.

7. Kabel nach Anspruch 6, **dadurch gekennzeichnet, dass** die Reaktionstemperatur Tₐₜ des thermochromen Mittels höher ist als die Extrusionstemperatur Tₑ der Polymerzusammensetzung.

8. Kabel nach Anspruch 7, **dadurch gekennzeichnet, dass** die Reaktionstemperatur Tₐₜ des thermochromen Mittels mindestens 15 °C höher ist als die Extrusionstemperatur Tₑ der Polymerzusammensetzung, und vorzugsweise mindestens 20 °C höher ist als die Extrusionstemperatur Tₑ der Polymerzusammensetzung.

9. Kabel nach einem der vorherigen Ansprüche, **dadurch gekennzeichnet, dass** die vernetzbare Polymerzusammensetzung weniger als 50 Gewichts-% des thermochromen Mittels umfasst.

10. Kabel nach einem der vorherigen Ansprüche, **dadurch gekennzeichnet, dass** die vernetzbare Polymerzusammensetzung mindestens 50 Gewichts-% Polymer und vorzugsweise mindestens 80 Gewichts-% Polymer umfasst.

11. Kabel nach einem der vorherigen Ansprüche, **dadurch gekennzeichnet, dass** das Polymer ein Olefinpolymer ist.

12. Kabel nach einem der vorherigen Ansprüche, **dadurch gekennzeichnet, dass** das Polymer ein Copolymer aus Ethylen und Vinylacetat (EVA) ist.

13. Kabel nach einem der vorherigen Ansprüche, **dadurch gekennzeichnet, dass** die vernetzte Polymerschicht die äußerste Schicht des Kabels ist.

14. Kabel nach einem der vorherigen Ansprüche, **dadurch gekennzeichnet, dass** die Reaktionstemperatur Tₐₜ des thermochromen Mittels um mindestens 15 °C höher ist als die Vernetzungstemperatur Tᵣ,

15. Herstellungsverfahren der vernetzten Polymerschicht nach einem der vorherigen Ansprüche, **dadurch gekennzeichnet, dass** es die folgenden Schritte umfasst:
i. Extrudieren der vernetzbaren Polymerzusammensetzung, um eine extrudierte Schicht zu bilden, und
ii. Vernetzen der in Schritt i erlangten extrudierten Schicht,
wobei die Schritte i und ii bei Temperaturen unterhalb der Reaktionstemperatur Tₐₜ des thermochromen Mittels durchgeführt werden.

## Claims

1. An energy and/or telecommunications cable comprising an elongate conductive element, the cable being **characterised in that** the elongate conductive element is surrounded by at least one cross-linked polymer layer obtained from a cross-linkable polymer composition comprising a polymer and a thermochromic agent that is capable of irreversibly changing colour at a reaction temperature Tₐₜ under the action of an increase in temperature, and **in that** the cross-linkable polymer composition comprises at least 5% by weight of the said thermochromic agent.

2. A cable according to claim 1, **characterised in that** the reaction temperature Tₐₜ of the thermochromic agent is higher than the cross-linking temperature Tᵣ.

3. A cable according to any one of the preceding claims, **characterised in that** the reaction temperature Tₐₜ of the thermochromic agent is higher than the melting temperature T_{f} or the glass transition temperature T_{g} of the polymer.

4. A cable according to claim 3, **characterised in that** the reaction temperature Tₐₜ of the thermochromic agent is higher by at least 15°C than the melting temperature T_{f} or the glass transition temperature T_{g} of the polymer, and preferably higher by at least 20°C than the melting temperature T_{f} or the glass transition temperature T_{g} of the polymer.

5. A cable according to any one of the preceding claims, **characterised in that** the cross-linked polymer layer extends continuously along the length of the cable.

6. A cable according to any one of the preceding claims, **characterised in that** the cross-linked polymer layer is an extruded layer.

7. A cable according to claim 6, **characterised in that** the reaction temperature Tₐₜ of the thermochromic agent is higher than the extrusion temperature Tₑ of the polymer composition.

8. A cable according to claim 7, **characterised in that** the reaction temperature Tₐₜ of the thermochromic agent is higher by at least 15°C than the extrusion temperature Tₑ of the polymer composition, and preferably higher by at least 20°C than the extrusion temperature Tₑ of the polymer composition.

9. A cable according to any one of the preceding claims, **characterised in that** the cross-linkable polymer composition comprises less than 50% by weight of the thermochromic agent.

10. A cable according to any one of the preceding claims, **characterised in that** the cross-linkable polymer composition comprises at least 50% by weight of the polymer, and preferably at least 80% by weight of the polymer.

11. A cable according to any one of the preceding claims, **characterised in that** the polymer is an olefin polymer.

12. A cable according to any one of the preceding claims, **characterised in that** the polymer is a copolymer of ethylene and vinyl acetate (EVA).

13. A cable according to any one of the preceding claims, **characterised in that** the cross-linked polymer layer is the outermost layer of the cable.

14. A cable according to any one of the preceding claims, **characterised in that** the reaction temperature Tₐₜ of the thermochromic agent is at least 15°C higher than the cross-linking temperature Tᵣ.

15. A manufacturing method for manufacturing the cross-linked polymer layer according to any one of the preceding claims, **characterised in that** it comprises the following steps:
i. extruding the cross-linkable polymer composition in order to form an extruded layer; and
ii. cross-linking the extruded layer obtained in step i,
the steps i and ii being carried out at temperatures that are lower than the reaction temperature Tₐₜ of the thermochromic agent.
